# EUROPÄISCHE PATENTANMELDUNG

(11) **EP 3 581 783 A1**
(43) Veröffentlichungstag der Anmeldung: **18.12.2019**
(21) Anmeldenummer: 19176887.8
(22) Anmeldetag: 28.05.2019
(51) Int. Cl.: F02M 25/025, F02M 25/022, F02M 25/028

(54) **WASSEREINSPRITZVORRICHTUNG FÜR EINE BRENNKRAFTMASCHINE UND VERFAHREN ZUR WASSEREINSPRITZUNG**

(30) Priorität: 11.06.2018 DE 102018209230; 20.06.2018 DE 102018209949
(71) Anmelder: Robert Bosch GmbH, 70442 Stuttgart (DE)
(72) Erfinder: Burak, Ingmar, 70437 Stuttgart (DE); Schenk, Peter, 71640 Ludwigsburg (DE)

(57) **Zusammenfassung**

Für eine Wassereinspritzvorrichtung für eine Brennkraftmaschine (2) umfassend wenigstens einen Wassertank (5) zum Speichern von Wasser, wenigstens einen Wasserinjektor (6) zum Einspritzen des Wassers in die Brennkraftmaschine (2), wenigstens ein Förderelement (3) zum Fördern von Wasser aus dem Wassertank (5) in den Wasserinjektor (6), wobei das Förderelement (3) durch wenigstens eine erste Leitung (7) mit dem Wassertank (5) verbunden ist, wobei das Förderelement (3) durch wenigstens eine zweite Leitung (8) mit dem Wasserinjektor (6) verbunden ist, wobei die Wassereinspritzvorrichtung (1) weiterhin wenigstens ein Filterelement (50) zur Filterung von Wasser in der Wassereinspritzvorrichtung (1) umfasst, wird vorgeschlagen, dass das Filterelement (50) wenigstens eine Heizvorrichtung (55) zum Heizen von durch das Filterelement (50) fließendem Wasser oder von im Filterelement (50) verbliebenen gefrorenen Restwasser umfasst.

## Beschreibung

### Stand der Technik

Die vorliegende Erfindung betrifft eine Wassereinspritzvorrichtung für eine Brennkraftmaschine und ein Verfahren zum Betreiben einer derartigen Wassereinspritzvorrichtung.

Aufgrund steigender Anforderungen an reduzierte Kohlenstoffdioxidemissionen werden Brennkraftmaschinen zunehmend hinsichtlich des Kraftstoffverbrauchs optimiert. Allerdings können bekannte Brennkraftmaschinen in Betriebspunkten mit hoher Last nicht optimal im Hinblick auf den Verbrauch betrieben werden, da der Betrieb durch Klopfneigung und hohe Abgastemperaturen begrenzt ist. Eine mögliche Maßnahme zur Reduzierung der Klopfneigung und zur Senkung der Abgastemperaturen ist die Einspritzung von Wasser. Hierbei sind üblicherweise separate Wassereinspritzsysteme vorhanden, um die Wassereinspritzung zu ermöglichen. So ist beispielsweise aus der DE 10 2015 208 476 A1 ein Wassereinspritzsystem für eine Brennkraftmaschine bekannt.

Bei Wassereinspritzsystemen für Brennkraftmaschinen ist normalerweise ein Wassertank vorgesehen, so dass jederzeit Wasser zur Einspritzung in das Saugrohr oder die Brennkammer der Brennkraftmaschine verfügbar ist. Zusätzlich kann bei derartigen Wassereinspritzsystemen Wasser mit Hilfe einer Wassergewinnungsanlage beispielsweise aus dem Abgassystem der Brennkraftmaschine in dem Kraftfahrzeug oder aus der Umgebung des Kraftfahrzeugs gewonnen werden und beispielsweise auch dem Wassertank zugeführt werden. Von dem Wassertank kann Wasser beispielsweise mittels einer Pumpe über eine Verteilervorrichtung zu Einspritzventilen, durch die das Wasser dann beispielsweise in ein Saugrohr oder eine Brennkammer der Brennkraftmaschine eingespritzt wird, befördert werden. Dazu kann, wie bei Einspritzsystemen für Brennstoff, die Verteilervorrichtung, beispielsweise in Form eines Rails, dazu vorgesehen sein Wasser zu speichern und auf mehrere Einspritzventile, durch die das Wasser dann eingespritzt werden kann, zu verteilen.

Eine Besonderheit von Einspritzvorrichtungen für Wasser gegenüber Einspritzvorrichtungen für Brennstoffe ist, dass das Wasser in der Wassereinspritzvorrichtung, insbesondere in dem Wassertank, beispielsweise nach Abstellen der Brennkraftmaschine gefrieren kann. Um die Wassereinspritzvorrichtung dann wieder in Betrieb zu nehmen, muss das gefrorene Wasser aufgetaut werden.

### Offenbarung der Erfindung

Erfindungsgemäß wird eine Wassereinspritzvorrichtung für eine Brennkraftmaschine umfassend wenigstens einen Wassertank zum Speichern von Wasser, wenigstens einen Wasserinjektor zum Einspritzen des Wassers in die Brennkraftmaschine, wenigstens ein Förderelement zum Fördern von Wasser aus dem Wassertank in den Wasserinjektor, wobei das Förderelement durch wenigstens eine erste Leitung mit dem Wassertank verbunden ist, wobei das Förderelement durch wenigstens eine zweite Leitung mit dem Wasserinjektor verbunden ist, wobei die Wassereinspritzvorrichtung weiterhin wenigstens ein Filterelement zur Filterung des Wassers in der Wassereinspritzvorrichtung umfasst. Erfindungsgemäß umfasst das Filterelement wenigstens eine Heizvorrichtung zum Heizen von durch das Filterelement fließendem oder von im Filterelement (50) verbliebenen gefrorenen Restwasser Wasser.

### Vorteile der Erfindung

Gegenüber dem Stand der Technik weist die Wassereinspritzvorrichtung für eine Brennkraftmaschine den Vorteil auf, dass Wasser in der Wassereinspritzvorrichtung durch die Heizvorrichtung des Filterelements aufgetaut werden kann. So kann die Wassereinspritzvorrichtung auch bei Temperaturen unterhalb des Gefrierpunkts betrieben werden. Auch kann, beispielsweise im Falle des Betriebens des Kraftfahrzeugs nach längeren Abstellphasen, in der Wassereinspritzvorrichtung gefrorenes Wasser schnell wieder aufgetaut werden. Durch eine das Filterelement heizende Heizvorrichtung kann Wärme besonders gut an eventuell gefrorenes Wasser oder Restwasser im Filterelement gelangen und dieses auftauen. Des weiteren kann die Wärme gut an das flüssige Wasser der Wassereinspritzvorrichtung übertragen werden, da das Wasser vor dem Einspritzen in die Brennkraftmaschine durch das Filterelement fließt und das Filterelement im Vergleich zu anderen Elementen der Wassereinspritzvorrichtung große Kontaktoberflächen zu Wasser aufweisen. Durch diese großen Kontaktoberflächen kann Wärme von der Heizvorrichtung vorteilhaft gut und effizient an das durch das Filterelement fließende Wasser abgegeben werden und das Wasser somit vorteilhaft gut erwärmt werden. Im Vergleich zur Erwärmung des Wassers in der Wassereinspritzvorrichtung an anderen Elementen der Wassereinspritzvorrichtung wird die Wärme durch das Filterelement somit besonders gut und effizient an das Wasser in der Wassereinspritzung übertragen.

Weitere vorteilhafte Ausgestaltungen und Weiterbildungen der Erfindung werden durch die in den Unteransprüchen angegebenen Merkmale ermöglicht.

Gemäß eines vorteilhaften Ausführungsbeispiels ist es vorgesehen, dass das Filterelement derart an die Brennkraftmaschine angebunden ist, dass die Heizvorrichtung als thermischer Kontakt von der Brennkraftmaschine zum Filterelement ausgebildet ist. Somit wird vorteilhaft die Abwärme der Brennkraftmaschine zum Heizen des Filterelements verwendet werden. Dies hat den Vorteil, dass auf weitere Elemente zur Heizung beispielsweise auch verzichtet werden kann und die Erwärmung des Wassers in der Wassereinspritzung, weise auch ausschließlich durch die Abwärme der Brennkraftmaschine erfolgen kann. So kann z.B. mittels eines Blechs die Wärme von einem Motorblock der Brennkraftmaschine an das Filterelement weitergegeben werden, oder eine Befestigung des Filterelements selbst wird wärmeleitend ausgeführt, beispielsweise durch Verwendung einer Blechschelle. Alternativ kann das Filterelement auch auf der dem Abgaskrümmer abgewandten Seite eines Hitzeblechs befestigt werden. So kann einerseits sichergestellt werden, dass das Filterelement nicht zu stark durch Strahlungswärme aufgeheizt wird, andererseits wird durch das Hitzeblech Wärme an das Filterelement übertragen.

Gemäß eines vorteilhaften Ausführungsbeispiels ist es vorgesehen, dass die Heizvorrichtung als elektrische Heizung ausgebildet ist. So kann das Filterelement besonders gut und vorteilhaft auch unabhängig vom Betriebszustand der Brennkraftmaschine geheizt werden, was beispielsweise auch vor dem anlassen der Brennkraftmaschine. Die elektrische Heizung kann entweder in das Filterelement integriert werden, beispielsweise durch einen Heizstab, oder von außen an dem Filterelement angebracht sein, beispielsweise durch eine elektrische Heizmatte.

Gemäß eines vorteilhaften Ausführungsbeispiels ist es vorgesehen, dass die Heizvorrichtung als hydraulische Heizung ausgebildet ist. Durch eine hydraulische Heizung des Filterelements kann bereits vorhandene Wärme in dem Kraftfahrzeug auf das Filterelement übertragen werden und somit beispielsweise auch auf eine externe Heizung verzichtet werden.

Gemäß eines vorteilhaften Beispiels ist es vorgesehen, dass die als hydraulische Heizung ausgebildete Heizvorrichtung an einen Motorkühlkreislauf angeschlossen ist. Somit wird vorteilhaft die Abwärme der Brennkraftmaschine zum Heizen des Filterelements verwendet werden. Beispielsweise kann die hydraulische Heizung als mäanderförge Rohrleitung innerhalb des Filterelements ausgebildet sein, durch die ein Teilstrom des Motorkühlwassers geleitet wird. Dieser Teilstrom gibt dann die Wärme an das Wasser im Filterelement ab. Dies hat den Vorteil, dass auf weitere Elemente zur Heizung verzichtet werden kann und die Erwärmung des Wassers in der Wassereinspritzung, ausschließlich durch die Abwärme der Brennkraftmaschine erfolgen kann.

Gemäß eines vorteilhaften Beispiels ist es vorgesehen, dass das Filterelement in der zweiten Leitung angeordnet ist. Ist das Filterelement der zweiten Leitung angeordnet, kann es sich beispielsweise um den Feinfilter der Wassereinspritzvorrichtung handeln.

Gemäß eines vorteilhaften Beispiels ist es vorgesehen, dass in der ersten Leitung ein weiteres Filterelement angeordnet ist. Durch das weitere Filterelement kann das Wasser vorteilhaft vorgeführt und an dem Filterelement der zweiten Leitung durch die Heizvorrichtung erwärmt werden.

Gemäß eines vorteilhaften Beispiels ist es vorgesehen, dass das weitere Filterelement eine weitere Heizvorrichtung umfasst. Somit kann das Wasser der Wassereinspritzvorrichtung durch das Filterelement und das weitere Filterelement fließen und vorteilhaft an 2 Stellen der Wassereinspritzvorrichtung durch die Heizvorrichtung und die zweite Heizvorrichtung erwärmt werden.

In einem vorteilhaften Ausführungsbeispiel ist die Heizvorrichtung als Polymerheizung ausgebildet. Dabei kann beispielsweise ein Filtergehäuse aus einem Polymer mit leitfähigen Füllstoffen und elektrischer Kontaktierung zur Beheizung ausgebildet sein. Die Polymerheizung kann beispielsweise auch als Umspritzung eines Filtergehäuses aus Metall vorgesehen sein.

Weiterhin erfindungsgemäß ist ein Verfahren zum Betreiben einer Wassereinspritzvorrichtung für eine Brennkraftmaschine, das einen Schritt zum Fördern von Wasser aus wenigstens einen Wassertank zum Speichern von Wasser zu wenigstens einem Wasserinjektor mittels eines Förderelements, wobei das Wasser durch ein eine Heizvorrichtung umfassendes Filterelement fließt, einen Schritt zum Erwärmen des Wassers in dem Filterelement mittels der Heizvorrichtung und einen Schritt zum Einspritzen des Wassers in die Brennkraftmaschine umfasst. Durch das Verfahren zum Betreiben der Wassereinspritzvorrichtung werden dieselben Vorteile wie durch die Wassereinspritzvorrichtung erzielt.

### Kurze Beschreibung der Zeichnungen

Ausführungsbeispiele der Erfindung sind in der Zeichnung dargestellt und werden in der nachfolgenden Beschreibung näher erläutert. Es zeigen
Fig. 1 eine schematische Ansicht einer Brennkraftmaschine mit einer Wassereinspritzvorrichtung,
Fig. 2 eine Wassereinspritzvorrichtung gemäß eines Ausführungsbeispiels der vorliegenden Erfindung.

### Ausführungsformen der Erfindung

Nachfolgend wird unter Bezugnahme auf die Figuren eine Wassereinspritzvorrichtung 1 einer Brennkraftmaschine 2 im Detail gemäß verschiedenen Ausführungsbeispielen beschrieben. Insbesondere wird die Brennkraftmaschine 2 nach dem Otto-Prinzip und mit Benzindirekteinspritzung betrieben.

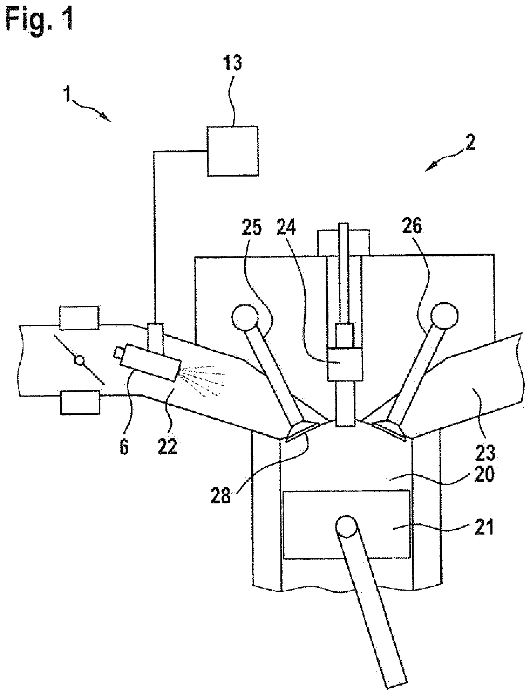

In Fig. 1 sind die Brennkraftmaschine 2 sowie die Wassereinspritzvorrichtung 1 schematisch dargestellt. Die Brennkraftmaschine 2 weist eine Vielzahl von Zylindern auf. Die Brennkraftmaschine 2 umfasst pro Zylinder einen Brennraum 20, in welchem ein Kolben 21 hin und her bewegbar ist. Ferner weist die Brennkraftmaschine 2 pro Zylinder beispielsweise einen Einlasskanal 22 auf, über welchen Luft zum Brennraum 20 zugeführt wird. Abgas wird über einen Abgaskanal 23 abgeführt. Hierzu sind am Einlasskanal 22 ein Einlassventil 25 und am Abgaskanal 23 ein Auslassventil 26 angeordnet. Das Bezugszeichen 24 bezeichnet ferner ein Kraftstoffeinspritzventil.

Die Wassereinspritzvorrichtung 1 ist dabei eine Einspritzvorrichtung durch die Wasser in die Brennkraftmaschine 2 eingespritzt wird. Dabei können neben dem Wasser auch andere Medien mit dem Wasser vermengt sein und zusammen mit dem Wasser gespeichert, gefördert und eingespritzt werden.

Die Wassereinspritzvorrichtung 1 umfasst wenigstens einen Wasserinjektor 6. Der Wasserinjektor 6 ist am Einlasskanal 22 angeordnet. Der Wasserinjektor 6 spritzt Wasser in den Einlasskanal 22 der Brennkraftmaschine 2 ein. Der Wasserinjektor 6 wird beispielsweise durch eine Steuereinheit 13 angesteuert. In diesem Ausführungsbeispiel ist ein Wasserinjektor 6 pro Zylinder vorgesehen. Alternativ können zur besseren Aufbereitung oder zur Erhöhung der pro Verbrennungszyklus maximal einspritzbaren Wassermenge zwei Wasserinjektoren 6 pro Zylinder angeordnet sein. Es kann aber beispielsweise auch nur ein Wasserinjektor 6 für alle Zylinder vorgesehen sein.

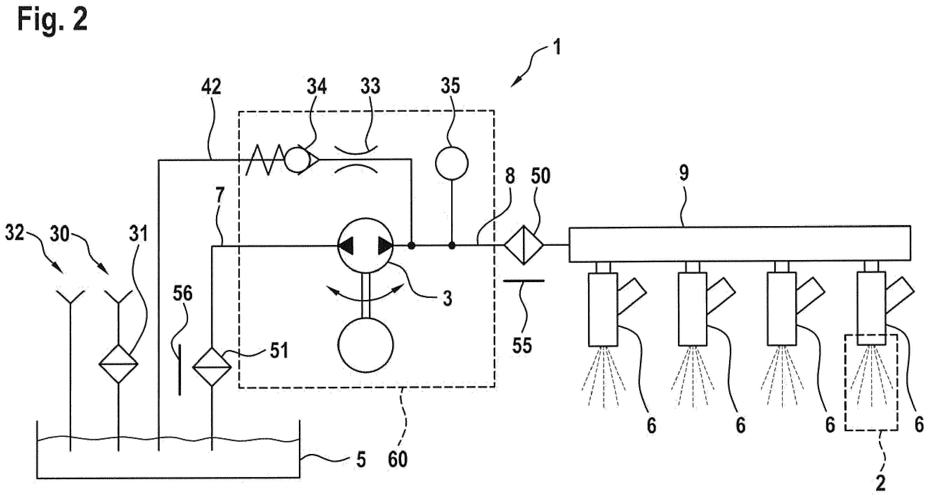

In Fig. 2 ist ein Ausführungsbeispiel einer Wassereinspritzvorrichtung 1 dargestellt. Die Wassereinspritzvorrichtung 1 umfasst einen Wassertank 5, in dem Wasser gespeichert ist. Weiterhin umfasst die Wassereinspritzvorrichtung 1 Wasserinjektoren 6. Die Wasserinjektoren 6 können beispielsweise an einem Verteiler 9, der Wasser auf die Wasserinjektoren 6 verteilt, angeschlossen sein. Die Wasserinjektoren 6 sind zum Einspritzen von Wasser in die Brennkraftmaschine 2 eines Kraftfahrzeugs vorgesehen. Die Wasserinjektoren 6 sind durch eine Leitung 7, 8 mit dem Wassertank 5 verbunden. Die Leitung 7, 8 umfasst eine erste Leitung 7, die den Wassertank 5 mit dem Förderelement 3 verbindet. Weiterhin umfasst die Leitung 7, 8 eine zweite Leitung 8, die das Förderelement 3 mit dem Wasserinjektor 6 verbindet.

Das Förderelement 3 kann beispielsweise als Pumpe ausgebildet sein. Das Förderelement 3 ist beispielsweise in ein Fördermodul 60 integriert. Das Förderelement 3 kann Wasser vom Wassertank 5 zu den Wasserinjektoren 6 fördern. Weiterhin kann das Förderelement 3 Wasser vom Wassertank 5 durch die erste Leitung 7 zu dem Fördermodul 60 und über eine Rückleitung 42 wieder zurück in den Wassertank 5 fördern.

Das Förderelement 3 teilt die Leitung 7, 8 in eine erste Leitung 7 und eine zweite Leitung 8. Dabei ist der Wassertank 5 durch die erste Leitung 7 mit dem Förderelement 3 verbunden. Weiterhin ist das Förderelement 3 durch die zweite Leitung 8 mit den Wasserinjektoren 6 verbunden. Wasser aus dem Wassertank 5 kann somit über die erste Leitung 7 zu dem Förderelement 3 weiter durch die zweite Leitung 8 zu den Wasserinjektoren 6 gefördert werden.

Die Wasserinjektoren 6 spritzen das Wasser dann in eine Brennkraftmaschine 2 ein. Das Wasser kann dabei beispielsweise, wie in Figur 1 dargestellt, in den Einlasskanal 22 eingespritzt werden. Das Wasser kann aber auch, beispielsweise in einer Einspritzung mit Kraftstoff direkt in die Brennkammer 20 eingespritzt werden.

Wie in Figur 2 dargestellt, umfasst die Wassereinspritzvorrichtung weiterhin wenigstens ein Filterelement 50. Das Filterelement 50 ist der Filterung des Wassers in der Wassereinspritzvorrichtung 1 vorgesehen. Bei der Filterung des Wassers durchläuft das Wasser das Filterelement 50. Das Filterelement 50 ist in diesem Ausführungsbeispiel in der zweiten Leitung 8 angeordnet. Somit durchläuft das Wasser beim Durchlaufen der zweiten Leitung 8 das Filterelement 50 und wird in diesem gefiltert.

In dem in Figur 2 dargestellten Ausführungsbeispiel ist außer dem Filterelement 50 in der zweiten Leitung 8 noch ein weiteres Filterelement 51 in der ersten Leitung 7 vorgesehen. Das weitere Filterelement 51 dient als Vorfilter, in dem das Wasser vorgefiltert wird bevor es das Filterelement 50, das als Hauptfilter dient, erreicht.

Das Filterelement 50 wird von einer Heizvorrichtung 55 geheizt. Die Heizvorrichtung 55 ist in Figur 2 schematisch dargestellt. Die Heizvorrichtung 55 ist zum Heizen von Wasser, das das Filterelement 50 durchfließt, vorgesehen. Die Heizvorrichtung 55 kann beispielsweise als elektrische Heizvorrichtung und/oder als hydraulische Heizvorrichtung ausgebildet sein. Die Heizvorrichtung 55 ist mit dem Filterelement 50 thermisch leitend verbunden. Dazu können beispielsweise in den schematischen Figuren nicht dargestellte thermisch leitende Bauelemente die Heizvorrichtung 55 mit dem Filterelement 50 thermisch leitend verbinden.

Die Heizvorrichtung 55 kann beispielsweise auch als thermischer Kontakt von der Brennkraftmaschine 2 zum Filterelement 50 ausgebildet sein. Dabei ist das Filterelement 50 derart an der Brennkraftmaschine 2 angeordnet, dass Wärme von der Brennkraftmaschine 2 auf das Filterelement 50 übertragen wird. Der thermische Kontakt zwischen der Brennkraftmaschine 2 und dem Filterelement 50 bildet somit die Heizvorrichtung 55. Dazu können beispielsweise in den schematischen Figuren nicht dargestellte thermisch leitende Bauelemente die Brennkraftmaschine 2 mit dem Filterelement 50 thermisch leitend verbinden und somit die Heizvorrichtung 55 bilden. So kann z.B. mittels eines Blechs die Wärme von einem Motorblock der Brennkraftmaschine an das Filterelement weitergegeben werden, oder eine Befestigung des Filterelements selbst wird wärmeleitend ausgeführt, beispielsweise durch Verwendung einer Blechschelle. Alternativ kann das Filterelement auch auf der dem Abgaskrümmer abgewandten Seite eines Hitzeblechs befestigt werden. So kann einerseits sichergestellt werden, dass das Filterelement nicht zu stark durch Strahlungswärme aufgeheizt wird, andererseits wird durch das Hitzeblech Wärme an das Filterelement übertragen.

Ist in der Wassereinspritzvorrichtung 1, wie in dem Ausführungsbeispiel in Figur 2, ein weiteres Filterelement 51 vorgesehen, so kann das weitere Filterelement 51 eine weitere Heizvorrichtung 56 umfassen. Die weitere Heizvorrichtung 56 ist zum Heizen von Wasser, das das weitere Filterelement 51 durchfließt, vorgesehen. Die weitere Heizvorrichtung 56 kann beispielsweise als elektrische Heizvorrichtung und/oder als hydraulische Heizvorrichtung ausgebildet sein. Die weitere Heizvorrichtung 56 ist mit dem weiteren Filterelement 51 thermisch leitend verbunden. Dazu können beispielsweise in den schematischen Figuren nicht dargestellte thermisch leitende Bauelemente die weitere Heizvorrichtung 56 mit dem weiteren Filterelement 51 thermisch leitend verbinden.

Die weitere Heizvorrichtung 56 kann beispielsweise auch als thermischer Kontakt von der Brennkraftmaschine 2 zum weiteren Filterelement 51 ausgebildet sein. Dabei ist das weitere Filterelement 51 derart an der Brennkraftmaschine 2 angeordnet, dass Wärme von der Brennkraftmaschine 2 auf das weitere Filterelement 51 übertragen wird. Der thermische Kontakt zwischen der Brennkraftmaschine 2 und dem weiteren Filterelement 51 bildet somit die weitere Heizvorrichtung 56. Dazu können beispielsweise in den schematischen Figuren nicht dargestellte thermisch leitende Bauelemente die Brennkraftmaschine 2 mit dem weiteren Filterelement 51 thermisch leitend verbinden und somit die weitere Heizvorrichtung 56 bilden.

Weiterhin kann die die Wassereinspritzvorrichtung 1 wie in diesem Ausführungsbeispiel eine Rückleitung 42 umfassen. Durch die Rückleitung 42 ist die zweite Leitung 8 mit dem Wassertank 5 verbunden. Wasser kann somit über die erste Leitung 7 dem Förderelement 3 zugeführt werden und über die zweite Leitung 8 und die Rückleitung 42 wieder in den Wassertank 5 zurückgeführt werden. In der Rückleitung 42 ist in diesem Ausführungsbeispiel eine Blende 33 und ein Rückschlagventil 34 angeordnet. Weiterhin ist in der Wassereinspritzvorrichtung 1 in diesem Ausführungsbeispiel in der zweiten Leitung 8 ein Drucksensor 35 vorgesehen.

Selbstverständlich sind auch weitere Ausführungsbeispiele und Mischformen der dargestellten Ausführungsbeispiele möglich.

## Patentansprüche

1. Wassereinspritzvorrichtung für eine Brennkraftmaschine (2) umfassend wenigstens einen Wassertank (5) zum Speichern von Wasser,
wenigstens einen Wasserinjektor (6) zum Einspritzen des Wassers in die Brennkraftmaschine (2),
wenigstens ein Förderelement (3) zum Fördern von Wasser aus dem Wassertank (5) in den Wasserinjektor (6),
wobei das Förderelement (3) durch wenigstens eine erste Leitung (7) mit dem Wassertank (5) verbunden ist,
wobei an das Förderelement (3) durch wenigstens eine zweite Leitung (8) mit dem Wasserinjektor (6) verbunden ist,
wobei die Wassereinspritzvorrichtung (1) weiterhin wenigstens ein Filterelement (50) zur Filterung des Wassers in der Wassereinspritzvorrichtung (1) umfasst,
**dadurch gekennzeichnet, dass** das Filterelement (50) wenigstens eine Heizvorrichtung (55) zum Heizen von durch das Filterelement (50) fließendem Wasser oder von im Filterelement (50) verbliebenen gefrorenen Restwasser umfasst.

2. Wassereinspritzvorrichtung nach Anspruch 1, **dadurch gekennzeichnet, dass** das Filterelement (50) derart an die Brennkraftmaschine (2) angebunden ist, dass die Heizvorrichtung (55) als thermischer Kontakt von der Brennkraftmaschine (2) zum Filterelement (50) ausgebildet ist.

3. Wassereinspritzvorrichtung nach Anspruch 1, **dadurch gekennzeichnet, dass** die Heizvorrichtung (55) als elektrische Heizung ausgebildet ist.

4. Wassereinspritzvorrichtung nach einem der vorhergehenden Ansprüche, **dadurch gekennzeichnet, dass** die Heizvorrichtung (55) als hydraulische Heizung ausgebildet ist.

5. Wassereinspritzvorrichtung nach Anspruch 4, **dadurch gekennzeichnet, dass** die als hydraulische Heizung ausgebildete Heizvorrichtung (55) an einen Motorkühlkreislauf angeschlossen ist.

6. Wassereinspritzvorrichtung nach einem der vorhergehenden Ansprüche, **dadurch gekennzeichnet, dass** das Filterelement (50) in der zweiten Leitung (8) angeordnet ist.

7. Wassereinspritzvorrichtung nach einem der vorhergehenden Ansprüche, **dadurch gekennzeichnet, dass** in der ersten Leitung (7) ein weiteres Filterelement (51) angeordnet ist.

8. Wassereinspritzvorrichtung nach einem der vorhergehenden Ansprüche, **dadurch gekennzeichnet, dass** das weitere Filterelement (51) eine weitere Heizvorrichtung (56) umfasst.

9. Wassereinspritzvorrichtung nach einem der vorhergehenden Ansprüche, **dadurch gekennzeichnet, dass** die Heizvorrichtung (55) als Polymerheizung ausgebildet ist.

10. Verfahren zum Betreiben einer Wassereinspritzvorrichtung (1) für eine Brennkraftmaschine (2) umfassend folgende Schritte:
- Fördern von Wasser aus wenigstens einen Wassertank (5) zum Speichern von Wasser zu wenigstens einem Wasserinjektor (6) mittels eines Förderelements (3), wobei das Wasser durch ein eine Heizvorrichtung (55) umfassendes Filterelement (50) fließt,
- Erwärmen des Wassers in dem Filterelement (50) mittels der Heizvorrichtung (55),
- Einspritzen des Wassers in die Brennkraftmaschine (2).
